# EUROPEAN PATENT APPLICATION

(11) **EP 4 455 987 A1**
(43) Date of publication of application: **30.10.2024**
(21) Application number: 24160510.4
(22) Date of filing: 29.02.2024
(51) Int. Cl.: G06T 1/20, G06T 5/00, G06T 5/20

(54) **SPATIO-TEMPORAL SEPARABLE FILTERS**

(30) Priority: 24.04.2023 US 202363497816 P; 09.02.2024 US 202418437298
(71) Applicant: Meta Platforms Technologies, LLC, Menlo Park, CA 94025 (US)
(72) Inventor: Yang, Grant Kaijuin, Menlo Park, 94025 (US); Lansel, Steven Paul, Menlo Park, 94025 (US); Ratmansky, Irad, Menlo Park, 94025 (US); Zitelli, Bruce, Menlo Park, 94025 (US)
(74) Representative: Murgitroyd & Company

(57) **Abstract**

A filter system can effectively filter images with low computation cost by, instead of using large 2D filters, applying a series of smaller filters that require less compute and memory. In some implementations, the larger filter function, *f,* is replaced by *f*₁*, f*₂, ..., *f_{N}* where *f(x)* ≈ *f*₁(*x*) + *f*₂(*x*) +... + *f_{N}*(*x*)*.* The filter system can apply these filters sequentially across multiple frames in time. The time integration of information by the human visual system results in the perception of a single higher quality filtering result, while using only the compute and memory footprint necessary to implement the filters. The number of frames across which a filter can be split without introducing flicker artifacts is dependent on the refresh rate of the display.

## Description

### TECHNICAL FIELD

The present disclosure is directed to spatial image filters which are used in image processing and computer graphics to resample images and/or improve image quality.

### BACKGROUND

In the field of extended reality (XR) which represents a spectrum of technologies including virtual reality (VR), augmented reality (AR), and mixed reality (MR), there is a continuous drive to provide users with immersive experiences of the highest visual quality possible. However, rendering high-quality content requires high computational resources which can be prohibitive with current XR systems. Specifically, displaying high frame rate images with high resolution in real-time can be particularly challenging due to the computational demands inherent in processing large volumes of image data. Moreover, while immersive and interactive experiences are central to XR, accommodating user's head motions in real-time is a critical issue to provide a smooth and engaging XR experience. Therefore, multiplexing high frame rate images with accurate motion tracking is needed for XR systems. Another challenge encountered is image filtering in XR systems. While the need for filtering is constant across XR content to ensure high resolution, using extensive filters can again increase computation costs and memory requirements.

Spatial image filters are used to resample images and/or improve image quality, but the quality of image filters is compute constrained, resulting in trade-offs between the filter extent and the resultant quality. In XR systems, spatial image filtering is used to perform resampling from frame inputs (layers) generated by an application to a composite image that is sent toward the display. This performs several functions, such as: 1) applying lens distortion so that virtual objects appear in the correct direction to the user; 2) rotating the image so that it is consistent with an updated predicted head pose that is more accurate than the head pose predicted when the layers were generated; 3) compositing multiple layers from a single or multiple applications; and 4) adjusting the resolution from the layer's resolution to the display resolution. Filtering can be applied based on attributes of XR content, such as its data density, data complexity, color gradient, texture, motion vector, frequency, key spatial points, and other meaningful characteristics.

Moreover, in order to enhance the visual quality in XR systems, the area where the user is looking (the foveal region) is often rendered in high resolution while the periphery is rendered in lower resolution. This technique, known as foveated rendering, requires reliable detection of the user's gaze direction and poses a challenge to balance the computational cost while minimizing flickers in the viewing content.

### SUMMARY

According to a first aspect, there is provided a method for efficient image filtering on an artificial reality (XR) device, the method comprising: identifying a set of one or more initial filters, each configured to produce an overall filter effect when applied to a frame in an XR graphics pipeline; selecting one or more sets of multiple image filters, wherein each set of multiple image filters produces a combined filter effect when applied to one or more frames in the XR graphics pipeline, and wherein each set of multiple image filters A) is matched to one of the initial filters and B) is selected such that the produced combined filter effect, for that set of multiple image filters, corresponds to the overall filter effect produced by the matched initial filter; and producing the one or more combined filter effects, for the one or more sets of multiple image filters, by applying the selected one or more sets of multiple image filters to the one or more frames in the XR graphics pipeline, wherein the application, of each selected set of multiple image filters, utilizes fewer compute resources, per frame, than application of the initial filter mapped to that set of multiple image filters.

At least one of the one or more initial filters may be a dense 2D filter. The set of multiple image filters matched to the dense 2D filter may be a series of filters that, when applied to the one or more frames in the XR graphics pipeline, require less compute and memory, per frame, than the dense 2D filter being applied to each of the one or more frames.

For a selected set of multiple image filters including a first image filter and a second image filter, the applying may include applying the first image filter to only a left eye portion of a frame of the one or more frames and applying the second image filter to only a right eye portion of the frame of the one or more frames.

The reduction in compute resources may be due to the application of the first image filter and second image filter each being applied to less of the frame than the matched initial filter would have been.

The one or more initial filters may include a first image filter and a second image filter. A particular set of the sets of multiple image filters may include the first image filter and the second image filter. The applying may include applying the first image filter to only a first of two sequential frames of the one or more frames and applying the second image filter to only a second of the two sequential frames of the one or more frames.

The reduction in compute resources may be due to the application of the first image filter and second image filter each being applied to fewer frames than the matched initial filters would have been.

The particular set may be matched to exactly one of the one or more initial filters.

The method may further comprise detecting a gaze direction of a user of the XR device. Applying the selected one or more sets of multiple image filters to the one or more frames in the XR graphics pipeline may include applying the one or more sets of multiple image filters to an area of a display corresponding to the gaze direction and not applying the one or more sets of multiple image filters to an area of the display not corresponding to the gaze direction.

The XR graphics pipeline may apply each set of the one or more sets of multiple image filters by iterating through the one or more sets of multiple image filters. A frequency with each set of the one or more sets of multiple image filters repeats may be based at least in part on available compute resources.

The XR graphics pipeline may apply each set of the one or more sets of multiple image filters by iterating through the one or more sets of multiple image filters. A frequency with each set of the one or more sets of multiple image filters repeats may be based at least in part on a determined eye movement speed of a user.

For a particular set of multiple image filters matched to a particular initial filter, the number of multiple image filters in the particular set may be based on a determined refresh rate of a display.

According to a second aspect, there is provided a computer-readable storage medium storing instructions that, when executed by a computing system, cause the computing system to carry out the method of the first aspect.

According to a third aspect, there is provided a computing system for efficient image filtering on an artificial reality (XR) device, the computing system comprising: one or more processors; and one or more memories storing instructions that, when executed by the one or more processors, cause the computing system to carry out the method of the first aspect.

According to a fourth aspect, there is provided a computer program product comprising instructions which, when the program is executed by a computer, cause the computer to carry out the method of the first aspect.

### BRIEF DESCRIPTION OF THE DRAWINGS

Figure 1 is a block diagram illustrating an overview of devices on which some implementations of the present technology can operate.
Figure 2A is a wire diagram illustrating a virtual reality headset which can be used in some implementations of the present technology.
Figure 2B is a wire diagram illustrating a mixed reality headset which can be used in some implementations of the present technology.
Figure 2C is a wire diagram illustrating controllers which, in some implementations, a user can hold in one or both hands to interact with an artificial reality environment.
Figure 3 is a block diagram illustrating an overview of an environment in which some implementations of the disclosed technology can operate.
Figure 4 is a conceptual diagram illustrating an example where a 5-tap sharpening filter is split into two 3-tap anisotropic sharpening filters which are run every other frame.
Figure 5 is a block diagram illustrating processing a series of frames over time.
Figure 6 is a block diagram illustrating multiple locations for enhancement filters within the XR graphics pipeline.
Figure 7 is a conceptual diagram illustrating an example of applying different sets of filters to left and right eye portions of a sequence of frames.
Figure 8 is a conceptual diagram illustrating an example of applying different sets of filters to alternate frames of a sequence of frames.
Figure 9 is a block diagram illustrating components which, in some implementations, can be used in a system employing the disclosed technology.
Figure 10 is a flow diagram illustrating a process used in some implementations of the present technology for efficient image filtering on an XR device.

The techniques introduced here may be better understood by referring to the following Detailed Description in conjunction with the accompanying drawings, in which like reference numerals indicate identical or functionally similar elements.

### DETAILED DESCRIPTION

Providing content in XR demands high frame rates to avoid user discomfort during head motion and there is limited time to generate each display frame. Thus, filtering must be very fast in order to deliver high resolution images at XR frame rates. This leads to a number of challenges such as 1) resulting layers can have low fidelity (either low resolution or suffering from compression artifacts if streamed); 2) composite images can have artifacts caused by increasing resolution of layers to the display resolution; 3) composite images can have low fidelity due to blur introduced by image filtering (especially due to non-linear lens distortion); and 4) aliasing can cause flicker or jagged edges. These constraints are due to limited compute / memory, particular on mobile devices or limited bandwidth devices for streamed content.

Aspects of the present disclosure are directed to a filter system that achieves a high quality filter results with low computation cost by leveraging the display refresh rates used in XR.

The filter system can replaces a single, larger filter function with a sequence of smaller filters. This mechanism can be represented mathematically as a series f1, f2, ..., fN. The smaller filters can be utilized on a sequence of frames or to different parts of the same frame (e.g., left and right eye portions), each performing their individual filtering tasks, approximating to the viewer the single, larger filter function. Thus, instead of using a large 2D, dense filter common in image processing to obtain high quality images, the filter system applies a series of smaller filters that require less compute and memory, per frame (e.g., because not all of the smaller filters are applied to each frame or to all of each frame). In some implementations, the larger filter function, *f,* is replaced by *f*₁, *f*₂, ..., *f_{N}* where *f*(*x*) ≈ *f*₁(*x*) + *f*₂(*x*) +... + *f_{N}*(*x*)*.* The filter system can apply these smaller filters sequentially across multiple frames in time. The time integration of information by the human visual system results in the perception of a single higher quality filtering result, while using only the compute and memory footprint necessary to implement the smaller filters.

The number of frames across which a filter can be split without introducing flicker artifacts is dependent on the refresh rate of the display. For example, a higher refresh rate can result in a greater number of frames a particular filter can be split across. The exact number of frames across which a filter function can be split can be based on a mapping, where the feedback from human viewers has set, for given refresh rates, the amount a given filter can be split. In some cases, these amounts can be general, based on input from many human viewers or can be based on feedback from the current viewer. In some cases, other factors can contribute to the determination of across how many frames a filter function can be split, such as how quickly the user's eye is moving, how much movement of displayed content is shown between frames (e.g., more eye or content movement resulting in ability to apply a function across more frames), or how much available compute resources there are (e.g., when there are less resources available per frame, split a function across a great number of frames). In some cases, the system can replace one or more of the filters with a filter that uses less compute resources or not apply all of the filters (e.g., to produce somewhat lower quality results for one or more frames). This can occur, e.g., when the system determines that below a threshold amount of compute resources are available. Reducing the filtering costs by amortizing the compute across frames and leveraging higher refresh rates reduces composition costs on XR systems.

Further compute savings may be accomplished by applying this technique in combination with foveation, e.g., applying the filtering only in the central region of the display or near where the user's gaze is directed and using cheaper filtering otherwise due to the user's lower perceptual ability in the periphery. This also has the further benefit of reducing the potential for flicker as the visual system is more sensitive to flicker in the periphery.

Embodiments of the disclosed technology may include or be implemented in conjunction with an artificial reality system. Artificial reality or extra reality (XR) is a form of reality that has been adjusted in some manner before presentation to a user, which may include, e.g., virtual reality (VR), augmented reality (AR), mixed reality (MR), hybrid reality, or some combination and/or derivatives thereof. Artificial reality content may include completely generated content or generated content combined with captured content (e.g., real-world photographs). The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, a "cave" environment or other projection system, or any other hardware platform capable of providing artificial reality content to one or more viewers.

"Virtual reality" or "VR," as used herein, refers to an immersive experience where a user's visual input is controlled by a computing system. "Augmented reality" or "AR" refers to systems where a user views images of the real world after they have passed through a computing system. For example, a tablet with a camera on the back can capture images of the real world and then display the images on the screen on the opposite side of the tablet from the camera. The tablet can process and adjust or "augment" the images as they pass through the system, such as by adding virtual objects. "Mixed reality" or "MR" refers to systems where light entering a user's eye is partially generated by a computing system and partially composes light reflected off objects in the real world. For example, a MR headset could be shaped as a pair of glasses with a pass-through display, which allows light from the real world to pass through a waveguide that simultaneously emits light from a projector in the MR headset, allowing the MR headset to present virtual objects intermixed with the real objects the user can see. "Artificial reality," "extra reality," or "XR," as used herein, refers to any of VR, AR, MR, or any combination or hybrid thereof.

The disclosed filtering system provides a significant progression in display system engineering. By intelligently distributing processing across frames or portions of frames, the filter system presents a cost-efficient and performance-enhancing solution. The filter system delivers a high-quality visual experience for the user while significantly reducing the strain on system resources, thereby promising better longevity and stability of the display system. The advantages of replacing a larger filter function with a series of smaller filters are multiple. First, it's easier to locally optimize smaller filters for different types of images and frames. Second, it allows a more distributed workload across the XR system's computational resources, smoothing out the processing peaks and troughs that would otherwise result from handling bulky, larger filter functions. In some cases, the reduction in compute resources is per frame, because not all of the smaller filters are applied to each frame. In some cases, the reduction in compute resources is per frame, because not all of the smaller filters are applied to each portion of a frame, e.g., some of the smaller functions are applied to only a left eye portion or right eye portion of a frame, only where the user is looking, only a central part of the frame, etc. Further, the filter system operates in unique synergy with the XR systems, taking advantage of the high display refresh rates that are naturally present in many XR systems. Instead of performing intensive computations for each frame, the filter system intelligently breaks down the operations according to the refresh rates. This helps in streamlining the process such that the computations are strung out over the duration of the refresh intervals, leading to a substantial decrease in the instantaneous load on the system.

The filter system optimizes compute resources such as memory and processor usage. Traditional filtration systems often consume a substantial amount of working memory and CPU cycles, creating bottlenecks on limited resource systems or slowing throughput for memory-heavy processes. In contrast, the novel system presented herein provides a way to overcome these challenges by taking advantage of a sequential application of smaller filters, thereby increasing efficiency and productivity.

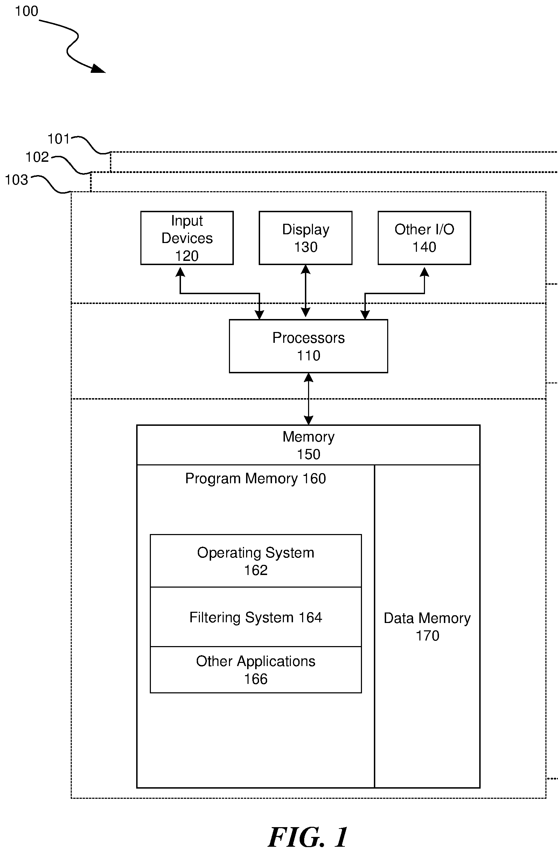

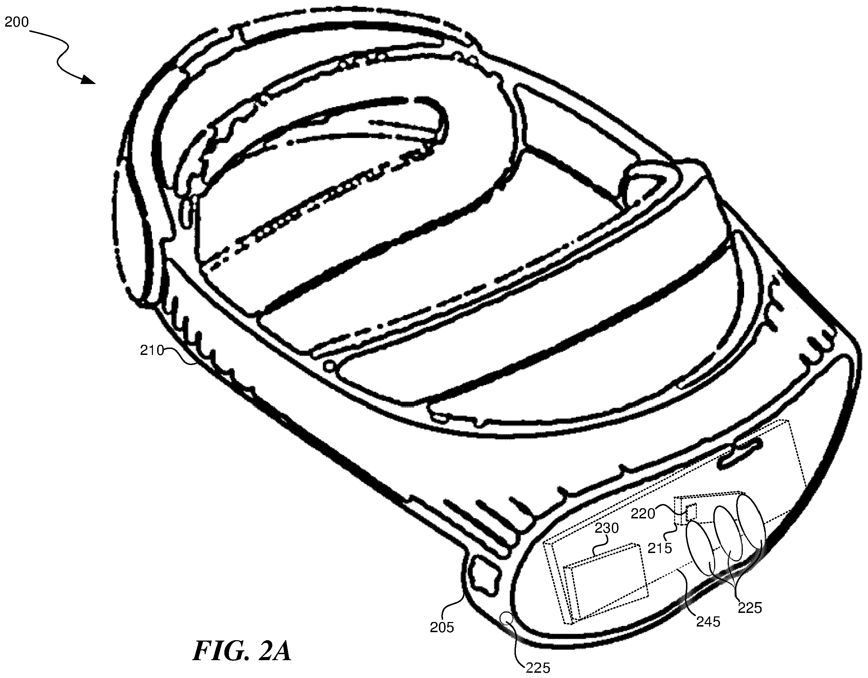

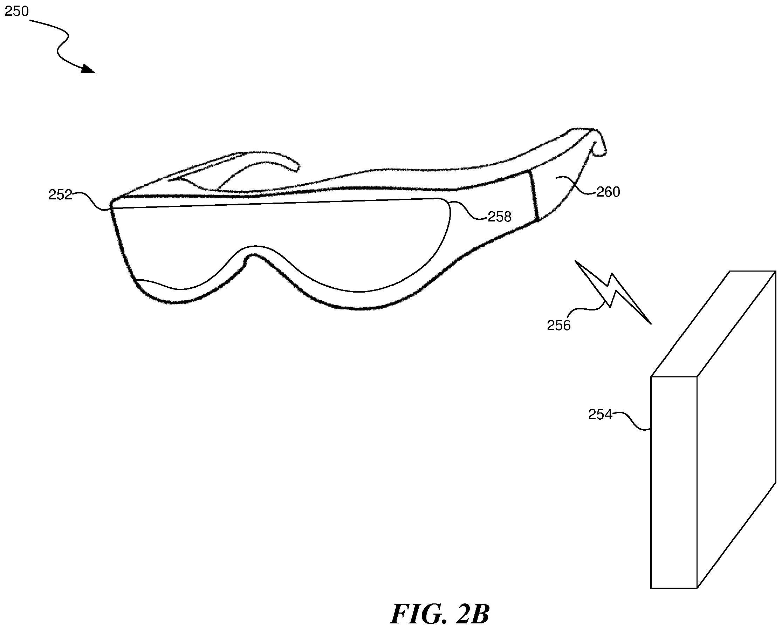

Several implementations are discussed below in more detail in reference to the figures. Figure 1 is a block diagram illustrating an overview of devices on which some implementations of the disclosed technology can operate. The devices can comprise hardware components of a computing system 100 that can perform efficient image filtering, e.g., on an artificial reality (XR) device. In various implementations, computing system 100 can include a single computing device 103 or multiple computing devices (e.g., computing device 101, computing device 102, and computing device 103) that communicate over wired or wireless channels to distribute processing and share input data. In some implementations, computing system 100 can include a stand-alone headset capable of providing a computer created or augmented experience for a user without the need for external processing or sensors. In other implementations, computing system 100 can include multiple computing devices such as a headset and a core processing component (such as a console, mobile device, or server system) where some processing operations are performed on the headset and others are offloaded to the core processing component. Example headsets are described below in relation to Figures 2A and 2B. In some implementations, position and environment data can be gathered only by sensors incorporated in the headset device, while in other implementations one or more of the non-headset computing devices can include sensor components that can track environment or position data.

Computing system 100 can include one or more processor(s) 110 (e.g., central processing units (CPUs), graphical processing units (GPUs), holographic processing units (HPUs), etc.) Processors 110 can be a single processing unit or multiple processing units in a device or distributed across multiple devices (e.g., distributed across two or more of computing devices 101-103).

Computing system 100 can include one or more input devices 120 that provide input to the processors 110, notifying them of actions. The actions can be mediated by a hardware controller that interprets the signals received from the input device and communicates the information to the processors 110 using a communication protocol. Each input device 120 can include, for example, a mouse, a keyboard, a touchscreen, a touchpad, a wearable input device (e.g., a haptics glove, a bracelet, a ring, an earring, a necklace, a watch, etc.), a camera (or other light-based input device, e.g., an infrared sensor), a microphone, or other user input devices.

Processors 110 can be coupled to other hardware devices, for example, with the use of an internal or external bus, such as a PCI bus, SCSI bus, or wireless connection. The processors 110 can communicate with a hardware controller for devices, such as for a display 130. Display 130 can be used to display text and graphics. In some implementations, display 130 includes the input device as part of the display, such as when the input device is a touchscreen or is equipped with an eye direction monitoring system. In some implementations, the display is separate from the input device. Examples of display devices are: an LCD display screen, an LED display screen, a projected, holographic, or augmented reality display (such as a heads-up display device or a head-mounted device), and so on. Other I/O devices 140 can also be coupled to the processor, such as a network chip or card, video chip or card, audio chip or card, USB, firewire or other external device, camera, printer, speakers, CD-ROM drive, DVD drive, disk drive, etc.

In some implementations, input from the I/O devices 140, such as cameras, depth sensors, IMU sensor, GPS units, LiDAR or other time-of-flights sensors, etc. can be used by the computing system 100 to identify and map the physical environment of the user while tracking the user's location within that environment. This simultaneous localization and mapping (SLAM) system can generate maps (e.g., topologies, grids, etc.) for an area (which may be a room, building, outdoor space, etc.) and/or obtain maps previously generated by computing system 100 or another computing system that had mapped the area. The SLAM system can track the user within the area based on factors such as GPS data, matching identified objects and structures to mapped objects and structures, monitoring acceleration and other position changes, etc.

Computing system 100 can include a communication device capable of communicating wirelessly or wire-based with other local computing devices or a network node. The communication device can communicate with another device or a server through a network using, for example, TCP/IP protocols. Computing system 100 can utilize the communication device to distribute operations across multiple network devices.

The processors 110 can have access to a memory 150, which can be contained on one of the computing devices of computing system 100 or can be distributed across of the multiple computing devices of computing system 100 or other external devices. A memory includes one or more hardware devices for volatile or non-volatile storage, and can include both read-only and writable memory. For example, a memory can include one or more of random access memory (RAM), various caches, CPU registers, read-only memory (ROM), and writable non-volatile memory, such as flash memory, hard drives, floppy disks, CDs, DVDs, magnetic storage devices, tape drives, and so forth. A memory is not a propagating signal divorced from underlying hardware; a memory is thus non-transitory. Memory 150 can include program memory 160 that stores programs and software, such as an operating system 162, filtering system 164, and other application programs 166. Memory 150 can also include data memory 170 that can include, e.g., filters divided into sub-filters, image frames and frame data, eye movement data, compute resource determinations, configuration data, settings, user options or preferences, etc., which can be provided to the program memory 160 or any element of the computing system 100.

Some implementations can be operational with numerous other computing system environments or configurations. Examples of computing systems, environments, and/or configurations that may be suitable for use with the technology include, but are not limited to, XR headsets, personal computers, server computers, handheld or laptop devices, cellular telephones, wearable electronics, gaming consoles, tablet devices, multiprocessor systems, microprocessor-based systems, set-top boxes, programmable consumer electronics, network PCs, minicomputers, mainframe computers, distributed computing environments that include any of the above systems or devices, or the like.

Figure 2A is a wire diagram of a virtual reality head-mounted display (HMD) 200. In this example, HMD 200 also includes augmented reality features, using passthrough cameras 225 to render portions of the real world, which can have computer generated overlays. The HMD 200 includes a front rigid body 205 and a band 210. The front rigid body 205 includes one or more electronic display elements of one or more electronic displays 245, an inertial motion unit (IMU) 215, one or more position sensors 220, cameras and locators 225, and one or more compute units 230. The position sensors 220, the IMU 215, and compute units 230 may be internal to the HMD 200 and may not be visible to the user. In various implementations, the IMU 215, position sensors 220, and cameras and locators 225 can track movement and location of the HMD 200 in the real world and in an artificial reality environment in three degrees of freedom (3DoF) or six degrees of freedom (6DoF). For example, locators 225 can emit infrared light beams which create light points on real objects around the HMD 200 and/or cameras 225 capture images of the real world and localize the HMD 200 within that real world environment. As another example, the IMU 215 can include e.g., one or more accelerometers, gyroscopes, magnetometers, other non-camera-based position, force, or orientation sensors, or combinations thereof, which can be used in the localization process. One or more cameras 225 integrated with the HMD 200 can detect the light points. Compute units 230 in the HMD 200 can use the detected light points and/or location points to extrapolate position and movement of the HMD 200 as well as to identify the shape and position of the real objects surrounding the HMD 200.

The electronic display(s) 245 can be integrated with the front rigid body 205 and can provide image light to a user as dictated by the compute units 230. In various examples, the electronic display 245 can be a single electronic display or multiple electronic displays (e.g., a display for each user eye). Examples of the electronic display 245 include: a liquid crystal display (LCD), an organic light-emitting diode (OLED) display, an active-matrix organic light-emitting diode display (AMOLED), a display including one or more quantum dot light-emitting diode (QOLED) sub-pixels, a projector unit (e.g., microLED, LASER, etc.), some other display, or some combination thereof.

In some implementations, the HMD 200 can be coupled to a core processing component such as a personal computer (PC) (not shown) and/or one or more external sensors (not shown). The external sensors can monitor the HMD 200 (e.g., via light emitted from the HMD 200) which the PC can use, in combination with output from the IMU 215 and position sensors 220, to determine the location and movement of the HMD 200.

Figure 2B is a wire diagram of a mixed reality HMD system 250 which includes a mixed reality HMD 252 and a core processing component 254. The mixed reality HMD 252 and the core processing component 254 can communicate via a wireless connection (e.g., a 60 GHz link) as indicated by link 256. In other implementations, the mixed reality system 250 includes a headset only, without an external compute device or includes other wired or wireless connections between the mixed reality HMD 252 and the core processing component 254. The mixed reality HMD 252 includes a pass-through display 258 and a frame 260. The frame 260 can house various electronic components (not shown) such as light projectors (e.g., LASERs, LEDs, etc.), cameras, eye-tracking sensors, MEMS components, networking components, etc.

The projectors can be coupled to the pass-through display 258, e.g., via optical elements, to display media to a user. The optical elements can include one or more waveguide assemblies, reflectors, lenses, mirrors, collimators, gratings, etc., for directing light from the projectors to a user's eye. Image data can be transmitted from the core processing component 254 via link 256 to HMD 252. Controllers in the HMD 252 can convert the image data into light pulses from the projectors, which can be transmitted via the optical elements as output light to the user's eye. The output light can mix with light that passes through the display 258, allowing the output light to present virtual objects that appear as if they exist in the real world.

Similarly to the HMD 200, the HMD system 250 can also include motion and position tracking units, cameras, light sources, etc., which allow the HMD system 250 to, e.g., track itself in 3DoF or 6DoF, track portions of the user (e.g., hands, feet, head, or other body parts), map virtual objects to appear as stationary as the HMD 252 moves, and have virtual objects react to gestures and other real-world objects.

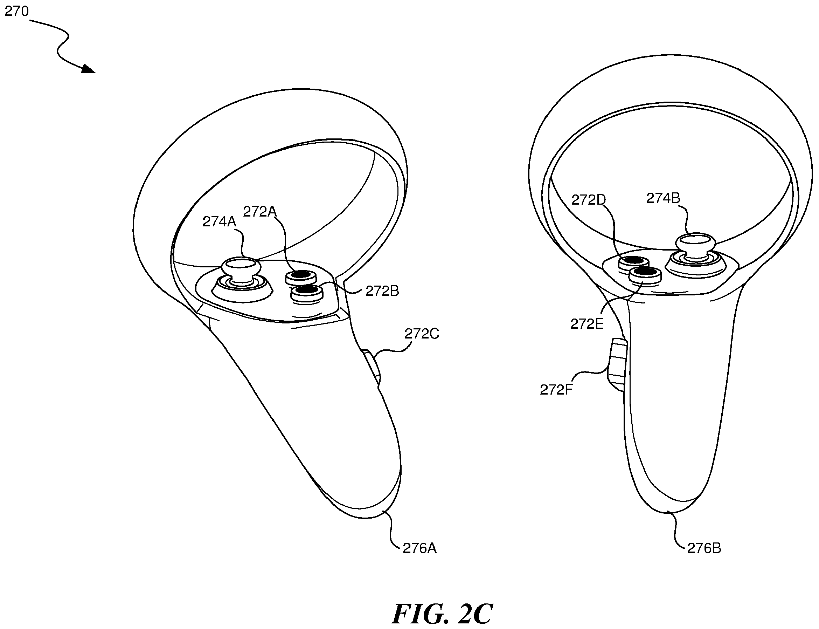

Figure 2C illustrates controllers 270 (including controller 276A and 276B), which, in some implementations, a user can hold in one or both hands to interact with an artificial reality environment presented by the HMD 200 and/or HMD 250. The controllers 270 can be in communication with the HMDs, either directly or via an external device (e.g., core processing component 254). The controllers can have their own IMU units, position sensors, and/or can emit further light points. The HMD 200 or 250, external sensors, or sensors in the controllers can track these controller light points to determine the controller positions and/or orientations (e.g., to track the controllers in 3DoF or 6DoF). The compute units 230 in the HMD 200 or the core processing component 254 can use this tracking, in combination with IMU and position output, to monitor hand positions and motions of the user. The controllers can also include various buttons (e.g., buttons 272A-F) and/or joysticks (e.g., joysticks 274A-B), which a user can actuate to provide input and interact with objects.

In various implementations, the HMD 200 or 250 can also include additional subsystems, such as an eye tracking unit, an audio system, various network components, etc., to monitor indications of user interactions and intentions. For example, in some implementations, instead of or in addition to controllers, one or more cameras included in the HMD 200 or 250, or from external cameras, can monitor the positions and poses of the user's hands to determine gestures and other hand and body motions. As another example, one or more light sources can illuminate either or both of the user's eyes and the HMD 200 or 250 can use eye-facing cameras to capture a reflection of this light to determine eye position (e.g., based on set of reflections around the user's comea), modeling the user's eye and determining a gaze direction.

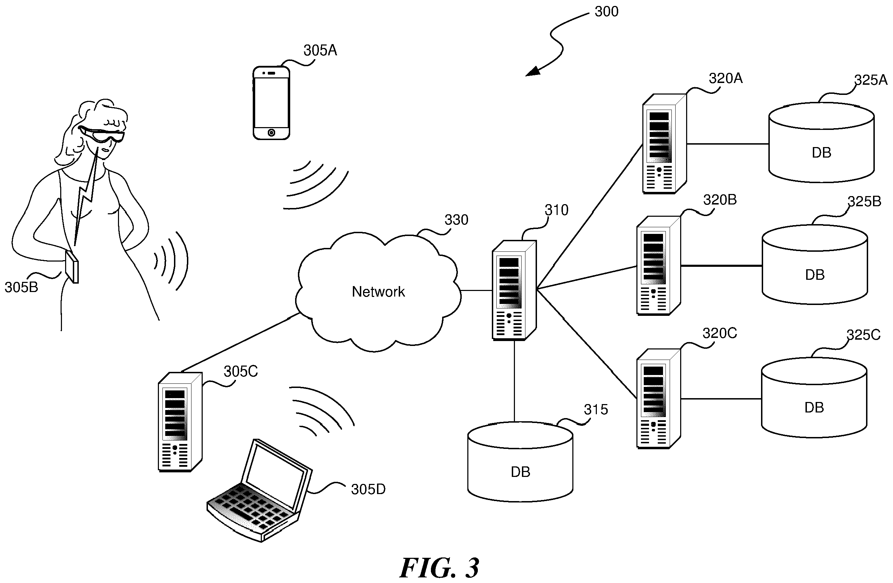

Figure 3 is a block diagram illustrating an overview of an environment 300 in which some implementations of the disclosed technology can operate. Environment 300 can include one or more client computing devices 305A-D, examples of which can include computing system 100. In some implementations, some of the client computing devices (e.g., client computing device 305B) can be the HMD 200 or the HMD system 250. Client computing devices 305 can operate in a networked environment using logical connections through network 330 to one or more remote computers, such as a server computing device.

In some implementations, server 310 can be an edge server which receives client requests and coordinates fulfillment of those requests through other servers, such as servers 320A-C. Server computing devices 310 and 320 can comprise computing systems, such as computing system 100. Though each server computing device 310 and 320 is displayed logically as a single server, server computing devices can each be a distributed computing environment encompassing multiple computing devices located at the same or at geographically disparate physical locations.

Client computing devices 305 and server computing devices 310 and 320 can each act as a server or client to other server/client device(s). Server 310 can connect to a database 315. Servers 320A-C can each connect to a corresponding database 325A-C. As discussed above, each server 310 or 320 can correspond to a group of servers, and each of these servers can share a database or can have their own database. Though databases 315 and 325 are displayed logically as single units, databases 315 and 325 can each be a distributed computing environment encompassing multiple computing devices, can be located within their corresponding server, or can be located at the same or at geographically disparate physical locations.

Network 330 can be a local area network (LAN), a wide area network (WAN), a mesh network, a hybrid network, or other wired or wireless networks. Network 330 may be the Internet or some other public or private network. Client computing devices 305 can be connected to network 330 through a network interface, such as by wired or wireless communication. While the connections between server 310 and servers 320 are shown as separate connections, these connections can be any kind of local, wide area, wired, or wireless network, including network 330 or a separate public or private network.

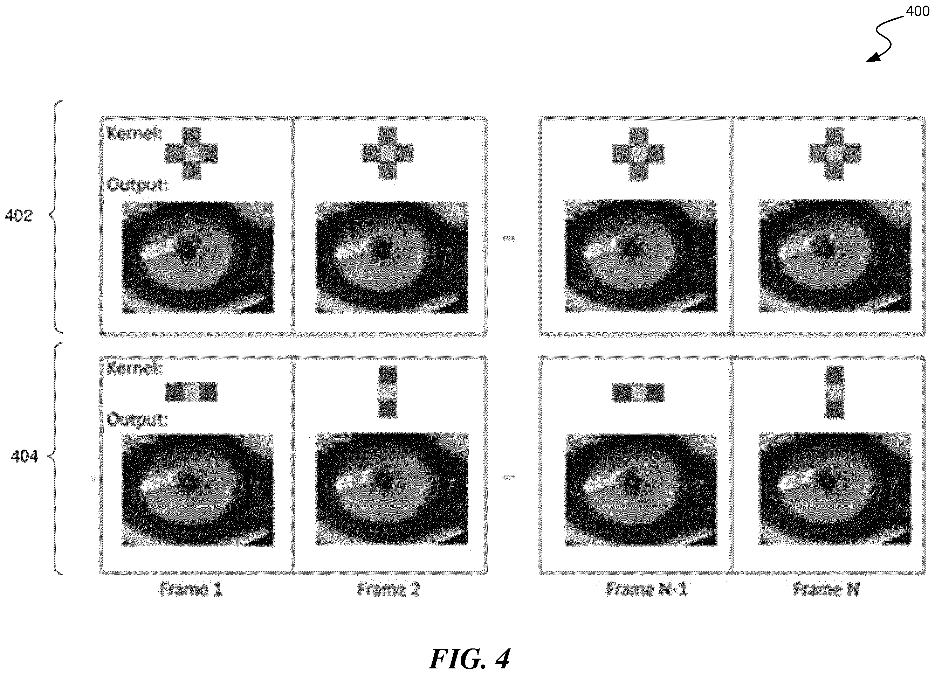

Figure 4 is a conceptual diagram illustrating an example 400 where a 5-tap sharpening filter is split into two 3-tap anisotropic sharpening filters which are run every other frame. In the example shown, a 5-tap sharpening filter is applied on the top images (results shown at 402) and the two 3-tap anisotropic sharpening filters which are run every other frame (results shown at 404) produce visually indistinguishable result on an XR device. In various implementations, different types of filters can be applied by the filter system, such as interpretation filters and sampling filters. Examples of such filters include contrast adaptive sharpening filters, lang cost scaling filters, super sampling filters, and others.

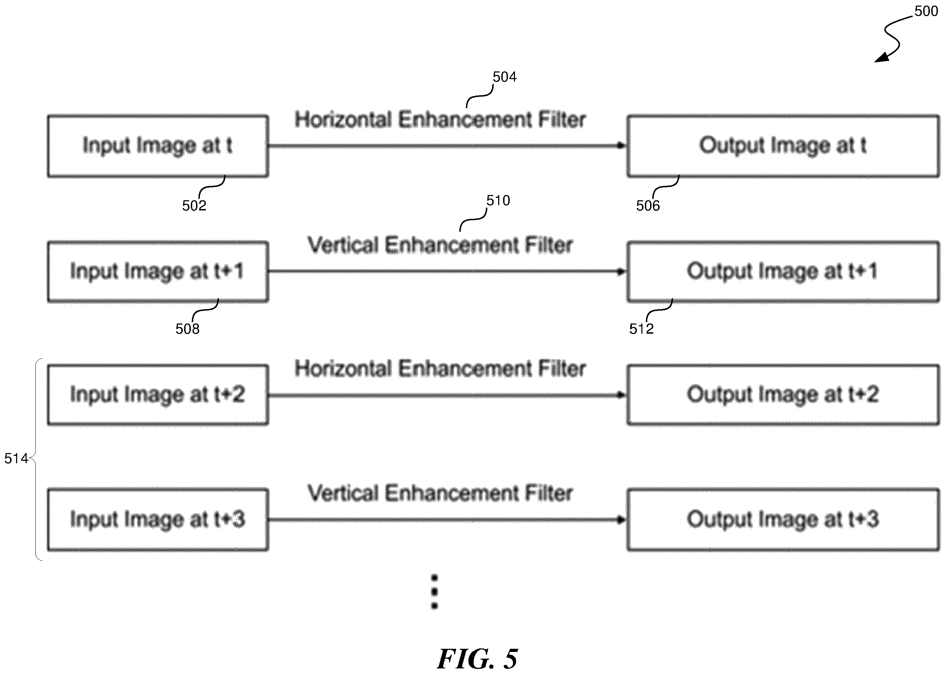

Figure 5 is a block diagram 500 illustrating processing a series of frames over time. In Figure 5, N=2 and the filters are specifically designed to enhance horizontal or vertical features in successive frames. In this example, an initial enhancement filter (not shown) has been split into horizontal enhancement filter 504 and vertical enhancement filter 510. As each successive image (e.g., input images 502 and 508) are processed, an alternate one of horizontal enhancement filter 504 or vertical enhancement filter 510 is applied. Thus, at time t, input image 502 has horizontal enhancement filter 504 applied to produce output image 506. Then, at time t+1, input image 508 has vertical enhancement filter 510 applied to produce output image 512. To a viewer, who successively sees output image 506 at time t and output image 512 at time t+1, her cognitive processing of these images integrates the results so the user's experience is similar to seeing the initial enhancement filter having been applied to both input image 502 and input image 508. This process can be repeated for each successive image passing through the image processing pipeline, as indicated by steps 514.

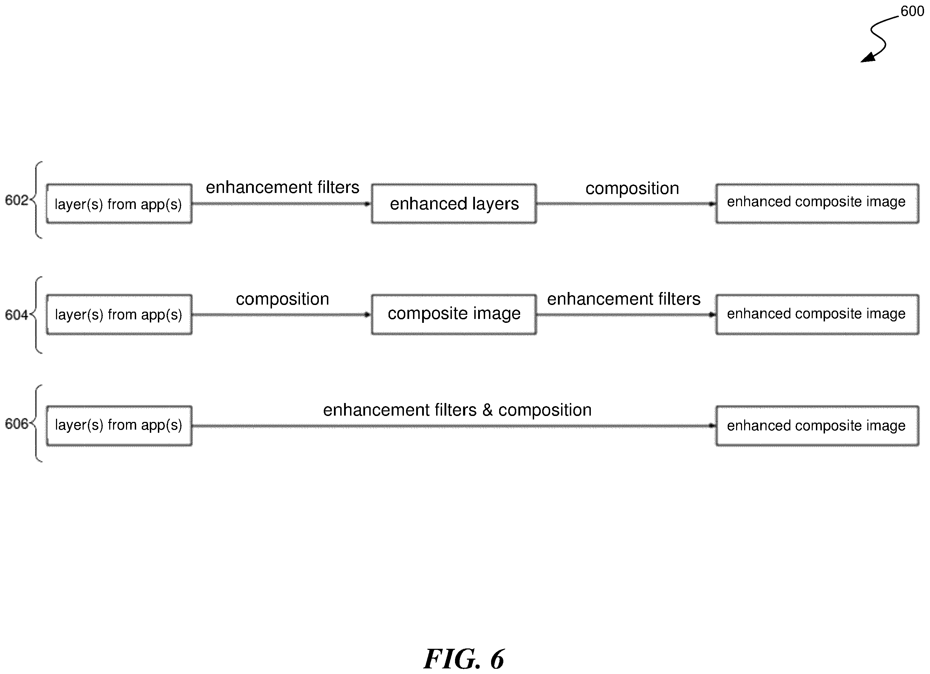

This filtering technique can be applied in different parts of an XR graphics pipeline. For example, Figure 6 is a block diagram 600 illustrating multiple locations for enhancement filters within an XR graphics pipeline. For simplicity, only a single layer is shown although multiple layers could be combined into a single Composite Image.

In some implementations, illustrated in steps 602, filters are applied to each layer before composition. This technique can be enabled / disabled depending on the layer's importance, resolution, or visibility; enable the filtering system (e.g., the "composition" system - combining multiple layers into one, which can include performing steps such as correcting for a predicted head pose / rotation, adjusting for lens distortion, etc.) to be faster, which enables it to start closer to frame display, hence using a more accurate head position prediction; and operates on input layers, which are often lower resolution than the display resolution.

In some implementations, illustrated in steps 604, filters are applied to composite images. This technique can run exactly once per frame independent of the number of layers and their resolution (e.g., can be more predictable, enabling less tearing or stale frames); can be enabled in a foveated manner based on position within the frame or a low latency eye gaze estimate; and can be performed on a processor separate from the GPU, which is designed for this repeatable operation so is more efficient.

In some implementations, illustrated in steps 606, filters can be part of the spatial image filtering process (e.g., composition). This technique: has the same number of steps as required for standard XR (hence lower compute and memory); can be enabled in a foveated manner based on position within the frame or a low latency eye gaze estimate; and can be performed on a processor separate from the GPU, which is designed for this repeatable operation so is more efficient.

In various implementations, one of steps 602, 604, or 606 can be applied in different systems or can be dynamically selected to be applied in different contexts. For example, steps 602 can be applied when the system applying the filtering has foveation active for only some layers or when filtering is being applied to only a single layer (or less than a first threshold number of layers); steps 604 can be applied when similar filtering is being applied for multiple layers (e.g., above one or above a second threshold number of layers, such as when multiple lower resolution layers are combined before having the same enhancement filter applied); steps 606 can be applied by default when the conditions for applying steps 602 and 604 are not met.

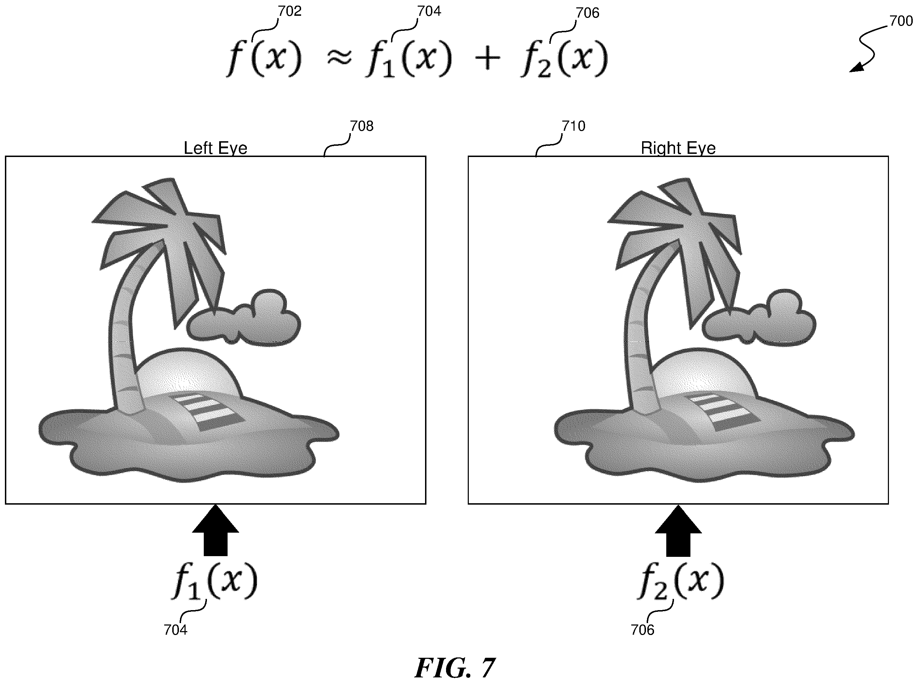

Figure 7 is a conceptual diagram illustrating an example 700 of applying different sets of filters to left and right eye portions of a sequence of frames. In example 700, filter function 702 has been split into sub-functions 704 and 706, which together produce a combined filter effect that corresponds to an overall filter effect produced by filter function 702. Sub-filter function 704 is applied to a left eye portion 708 of a frame (i.e., the portion of a frame shown to a left eye in a system that outputs different perspective images to the left eye and right eye of a user) and sub-filter function 706 is applied to a right eye portion 710 of the frame (i.e., the portion of the frame shown to the right eye in the system that outputs different perspective images to the left eye and right eye of a user). Due to the human perception system, the user perceives the partial effect of applying sub-filter function 704 to the left eye portion 708 and the partial effect of applying sub-filter function 706 to the right eye portion 710 as similar to the overall filter effect that would have been produced by filter function 702 having been applied to both eye portions. Yet, applying only sub-filter effects 704 and 706, one to each eye portion, utilizes fewer compute resource than applying the function 702 to each eye portion.

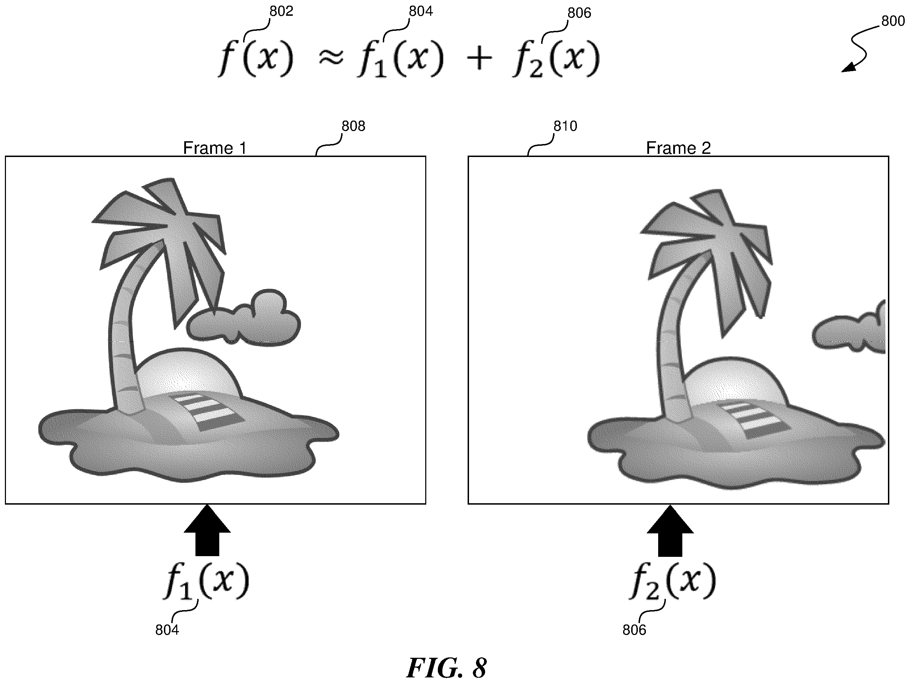

Figure 8 is a conceptual diagram illustrating an example 800 of applying different sets of filters to alternate frames of a sequence of frames. In Example 800, filter function 802 has been split into sub-functions 804 and 806, which together produce a combined filter effect that corresponds to an overall filter effect produced by filter function 802. Sub-filter function 804 is applied to a first frame 808, in a sequence of frames and sub-filter function 806 is applied to a second frame 810, in the sequence of frames. Due to the human perception system, the user perceives the partial effect of applying sub-filter function 804 to the first frame and the partial effect of applying sub-filter function 806 to the second frame 810 as similar to the overall filter effect that would have been produced by filter function 802 being applied to each frame 808 and 810. Yet, applying only sub-filter 804 to frame 808 and sub-filter 806 to frame 810 utilizes fewer compute resource than applying the function 802 to each frame 808 and 810.

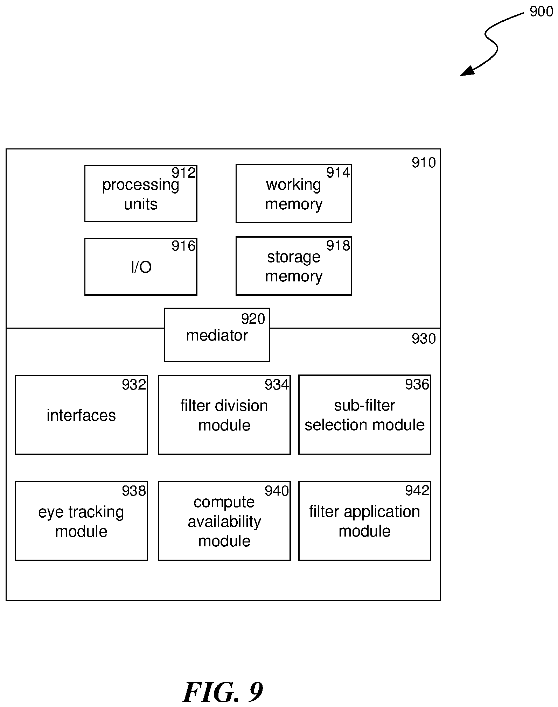

Figure 9 is a block diagram illustrating components 900 which, in some implementations, can be used in a system employing the disclosed technology. Components 900 can be included in one device of computing system 100 or can be distributed across multiple of the devices of computing system 100. The components 900 include hardware 910, mediator 920, and specialized components 930. As discussed above, a system implementing the disclosed technology can use various hardware including processing units 912, working memory 914, input and output devices 916 (e.g., cameras, displays, IMU units, network connections, etc.), and storage memory 918. In various implementations, storage memory 918 can be one or more of: local devices, interfaces to remote storage devices, or combinations thereof. For example, storage memory 918 can be one or more hard drives or flash drives accessible through a system bus or can be a cloud storage provider (such as in storage 315 or 325) or other network storage accessible via one or more communications networks. In various implementations, components 900 can be implemented in a client computing device such as client computing devices 305 or on a server computing device, such as server computing device 310 or 320.

Mediator 920 can include components which mediate resources between hardware 910 and specialized components 930. For example, mediator 920 can include an operating system, services, drivers, a basic input output system (BIOS), controller circuits, or other hardware or software systems.

Specialized components 930 can include software or hardware configured to perform operations for efficient image filtering on an artificial reality (XR) device. Specialized components 930 can include filter division module 934, sub-filter selection module 936, eye tracking module 938, compute availability module 940, filter application module 942, and components and APIs which can be used for providing user interfaces, transferring data, and controlling the specialized components, such as interfaces 932. In some implementations, components 900 can be in a computing system that is distributed across multiple computing devices or can be an interface to a server-based application executing one or more of specialized components 930. Although depicted as separate components, specialized components 930 may be logical or other nonphysical differentiations of functions and/or may be submodules or code-blocks of one or more applications.

Filter division module 934, can take an initial filter and deconstruct it into a set of multiple sub-filters that each require less compute power than the initial filter and that, together, produce an effect on a frame similar to what would be achieved by application of the initial filter on that frame.

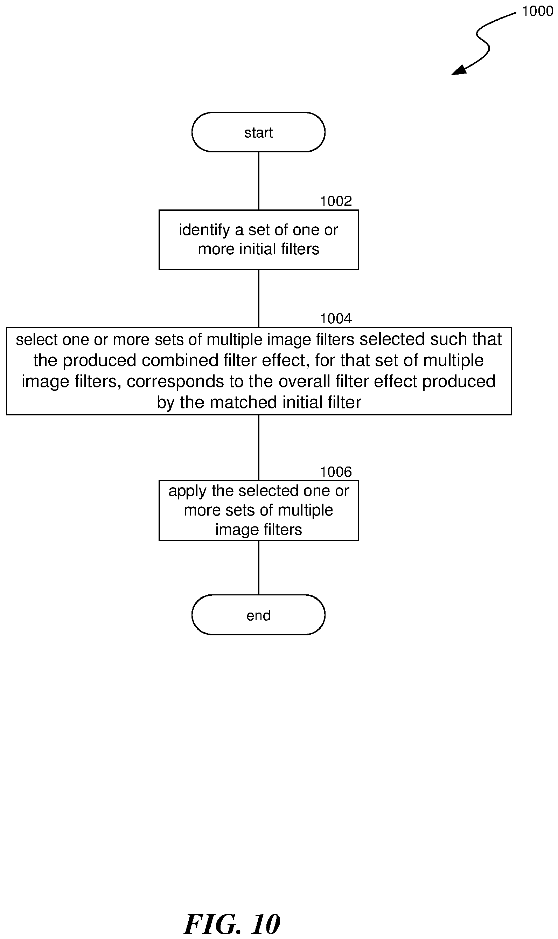

Sub-Filter selection module 936, can select sets of multiple image filters (e.g., a set produced by filter division module 934 corresponding to an initial filter), where each set is selected such that the produced combined filter effect, for that set of multiple image filters, corresponds to the overall filter effect produced by the corresponding initial filter. Additional details on selecting a set of sub-filters is provided below in relation to block 1006 of Figure 10.

Eye tracking module 938, can track movement of the user's eyes and/or where the user is looking. This information can be used by filter division module 934 to determine how many sub-filters a filter is divided into. Additional details on this are provided below in relation to block 1006 of Figure 10.

Compute availability module 940, can determine an amount of available compute resources available to a graphics pipeline. This information can be used by filter division module 934 to determine how many sub-filters a filter is divided into. Additional details on this are provided below in relation to block 1006 of Figure 10.

Filter application module 942, can A) apply different ones of a set of sub-filters, selected by the sub-filter selection module 936, to different parts of a frame (e.g., left and right eye portions), B) apply different ones of a set of sub-filters, selected by the sub-filter selection module 936, to different frames in a sequence of frames, or C) both A) and B). Additional details on application of sets of sub-filters are provided below in relation to block 1008 of Figure 10.

Those skilled in the art will appreciate that the components illustrated in Figures 1-9 described above, and in the flow diagram discussed below, may be altered in a variety of ways. For example, the order of the logic may be rearranged, substeps may be performed in parallel, illustrated logic may be omitted, other logic may be included, etc. In some implementations, one or more of the components described above can execute one or more of the processes described below.

Figure 10 is a flow diagram illustrating a process 1000 used in some implementations of the present technology for efficient image filtering on an artificial reality (XR) device (or on another device implementing a graphics pipeline). In some implementations, process 1000 can be performed as part of a graphics processing pipeline, e.g., on an XR device or on another devices supporting an XR or other display device, such as compute unit 254 or server 310 or 320. In some implementations, portions of process 1000 can be performed ahead of time e.g., the division of an initial filter into a set of multiple filters.

At block 1002, process 1000 can identify a set of one or more initial filters to be applied to a frame in a graphics processing pipeline. Each initial filter can be configured to produce an overall filter effect when applied to the frame in the graphics pipeline. Examples of initial filters include enhancement filters such as contrast sharpening filters, scaling filters, sampling filters, etc.

At block 1004, process 1000 can select one or more sets of multiple image filters, where each set produces a combined filter effect when applied to one or more frames in the graphics pipeline. Each set A) is matched to one of the initial filters and B) is selected such that the produced combined filter effect, for that set, corresponds to the overall filter effect produced by the matched initial filter. For example, an initial enhancement filter can be matched to (e.g., deconstructed into) a set of two filters, one of which performs the vertical portion of the initial enhancement filter and one of which performs the horizontal portion of the initial enhancement filter, thus if both the filters were performed on the same frame, they would produce a similar overall effect as the initial enhancement filter.

In some implementations, a set of image filters corresponding to an initial filter can be selected based on available compute, where the initial filter to which the set corresponds is deconstructed into more parts (filter functions) in the set when there is less compute power available (e.g., per frame) and deconstructed into fewer parts in the set when there is more compute power available. This can be, for example, when a frequency with which the set repeats is based at least in part on available compute resources. In some implementations, a set of image filters corresponding to an initial filter can be selected based on eye speed movement or speed of movement of content detected across frames to which the initial filter will be applied, where the initial filter to which the set corresponds is deconstructed into more parts (filter functions) when the eye or content movement is fast and deconstructed into fewer parts when the eye or content movement is slow. This can be, for example, when a frequency with which the set repeats is based at least in part on a determined eye movement speed of a user. In some implementations, a set of image filters corresponding to an initial filter can be selected based on system refresh rate, where the initial filter to which the set corresponds is deconstructed into more parts (filter functions) when the refresh rate is high and deconstructed into fewer parts when the refresh rate is low. This can be, for example, when the number of filters in the set is based on a determined refresh rate of a display.

At block 1006, process 1000 can produce the one or more combined filter effects, for the one or more sets of multiple image filters selected at block 1004, by applying the selected one or more sets of multiple image filters to one or more frames in the graphics pipeline. Each set of image filters is selected such that the application, of each selected set of multiple image filters, utilizes fewer compute resources, per frame, than application of the initial filter mapped to that set of multiple image filters.

In some implementations, a set of image filters can be applied such that each of the filters in the set is applied to different ones in a sequence of frames in the graphics pipeline. In some implementations, a set of the filters selected at block 1004 includes two or more of the initial filters identified at block 1002, and the application of filters across a sequence of frames includes application of the two or more filters, one to each frame across the sequence of frames. For example, if the initial set includes a sampling filter and an enhancement filter, the sampling filter may be applied to only a first frame in a sequence of two frames and the enhancement filter may be applied to only the second frame. In another example, a filter can be deconstructed into two filters, e.g., sampling sub-filter one and sampling sub-filter two; the sampling sub-filter one may be applied to only a first frame in a sequence of two frames and the sampling sub-filter two may be applied to only the second frame. Thus, there can be a reduction in compute resources utilized due to the application of the first image filter and second image filter each being applied to fewer frames than the matched initial filters would have been.

In some implementations, a set of image filters can be applied such that each of the filters in the set is applied to different parts of the same frame in the graphics pipeline. In some implementations, a set of the filters selected at block 1004 includes two or more of the initial filters identified at block 1002, and the application of filters to a frame includes application of the two or more filters, one to each frame portion of a frame (such as one to the right eye portion of a frame output to a system with different eye outputs and one to the left eye portion of the frame). For example, if the initial set includes a sampling filter and an enhancement filter, the sampling filter may be applied to only the left eye portion of the frame and the enhancement filter may be applied to only the right eye portion of the frame. In another example, a filter can be deconstructed into two filters, e.g., sampling sub-filter one and sampling sub-filter two; the sampling sub-filter one may be applied to only the left eye portion of a frame and the sampling sub-filter two may be applied to only the right eye portion of the frame. Thus, there can be a reduction in compute resources utilized due to the application of the first image filter and second image filter each being applied less of the frame than the matched initial filter would have been.

In some implementations, application of a set of filters can be applied using foveation, where the area to which a filter is applied can be a center region of a frame or a region corresponding to where the system has determined the user is looking within the frame.

Several implementations of the disclosed technology are described above in reference to the figures. The computing devices on which the described technology may be implemented can include one or more central processing units, memory, input devices (e.g., keyboard and pointing devices), output devices (e.g., display devices), storage devices (e.g., disk drives), and network devices (e.g., network interfaces). The memory and storage devices are computer-readable storage media that can store instructions that implement at least portions of the described technology. In addition, the data structures and message structures can be stored or transmitted via a data transmission medium, such as a signal on a communications link. Various communications links can be used, such as the Internet, a local area network, a wide area network, or a point-to-point dial-up connection. Thus, computer-readable media can comprise computer-readable storage media (e.g., "non-transitory" media) and computer-readable transmission media.

Reference in this specification to "implementations" (e.g., "some implementations," "various implementations," "one implementation," "an implementation," etc.) means that a particular feature, structure, or characteristic described in connection with the implementation is included in at least one implementation of the disclosure. The appearances of these phrases in various places in the specification are not necessarily all referring to the same implementation, nor are separate or alternative implementations mutually exclusive of other implementations. Moreover, various features are described which may be exhibited by some implementations and not by others. Similarly, various requirements are described which may be requirements for some implementations but not for other implementations.

As used herein, being above a threshold means that a value for an item under comparison is above a specified other value, that an item under comparison is among a certain specified number of items with the largest value, or that an item under comparison has a value within a specified top percentage value. As used herein, being below a threshold means that a value for an item under comparison is below a specified other value, that an item under comparison is among a certain specified number of items with the smallest value, or that an item under comparison has a value within a specified bottom percentage value. As used herein, being within a threshold means that a value for an item under comparison is between two specified other values, that an item under comparison is among a middle-specified number of items, or that an item under comparison has a value within a middle-specified percentage range. Relative terms, such as high or unimportant, when not otherwise defined, can be understood as assigning a value and determining how that value compares to an established threshold. For example, the phrase "selecting a fast connection" can be understood to mean selecting a connection that has a value assigned corresponding to its connection speed that is above a threshold.

As used herein, the word "or" refers to any possible permutation of a set of items. For example, the phrase "A, B, or C" refers to at least one of A, B, C, or any combination thereof, such as any of: A; B; C; A and B; A and C; B and C; A, B, and C; or multiple of any item such as A and A; B, B, and C; A, A, B, C, and C; etc.

Although the subject matter has been described in language specific to structural features and/or methodological acts, it is to be understood that the subject matter defined in the appended claims is not necessarily limited to the specific features or acts described above. Specific examples and implementations have been described herein for purposes of illustration, but various modifications can be made without deviating from the scope of the present disclosure. The specific features and acts described above are disclosed as example forms of implementing the claims that follow.

Any patents, patent applications, and other references noted above are incorporated herein by reference. Aspects can be modified, if necessary, to employ the systems, functions, and concepts of the various references described above to provide yet further implementations. If statements or subject matter in a document incorporated by reference conflicts with statements or subject matter of this application, then this application shall control.

## Claims

1. A method for efficient image filtering on an artificial reality (XR) device, the method comprising:
identifying a set of one or more initial filters, each configured to produce an overall filter effect when applied to a frame in an XR graphics pipeline;
selecting one or more sets of multiple image filters,
wherein each set of multiple image filters produces a combined filter effect when applied to one or more frames in the XR graphics pipeline, and
wherein each set of multiple image filters A) is matched to one of the initial filters and B) is selected such that the produced combined filter effect, for that set of multiple image filters, corresponds to the overall filter effect produced by the matched initial filter; and
producing the one or more combined filter effects, for the one or more sets of multiple image filters, by applying the selected one or more sets of multiple image filters to the one or more frames in the XR graphics pipeline, wherein the application, of each selected set of multiple image filters, utilizes fewer compute resources, per frame, than application of the initial filter mapped to that set of multiple image filters.

2. The method of claim 1, wherein at least one of the one or more initial filters is a dense 2D filter and the set of multiple image filters matched to the dense 2D filter is a series of filters that, when applied to the one or more frames in the XR graphics pipeline, require less compute and memory, per frame, than the dense 2D filter being applied to each of the one or more frames.

3. The method of claim 1 or 2, wherein for a selected set of multiple image filters including a first image filter and a second image filter, the applying includes applying the first image filter to only a left eye portion of a frame of the one or more frames and applying the second image filter to only a right eye portion of the frame of the one or more frames.

4. The method of claim 3, wherein the reduction in compute resources is due to the application of the first image filter and second image filter each being applied to less of the frame than the matched initial filter would have been.

5. The method of any preceding claim, wherein
the one or more initial filters includes a first image filter and a second image filter,
a particular set of the sets of multiple image filters includes the first image filter and the second image filter, and
the applying includes applying the first image filter to only a first of two sequential frames of the one or more frames and applying the second image filter to only a second of the two sequential frames of the one or more frames.

6. The method of claim 5, wherein the reduction in compute resources is due to the application of the first image filter and second image filter each being applied to fewer frames than the matched initial filters would have been.

7. The method of claim 5 or 6, wherein the particular set is matched to exactly one of the one or more initial filters.

8. The method of any preceding claim, further comprising:
detecting a gaze direction of a user of the XR device;
wherein the applying the selected one or more sets of multiple image filters to the one or more frames in the XR graphics pipeline includes applying the one or more sets of multiple image filters to an area of a display corresponding to the gaze direction and not applying the one or more sets of multiple image filters to an area of the display not corresponding to the gaze direction.

9. The method of any preceding claim,
wherein the XR graphics pipeline applies each set of the one or more sets of multiple image filters by iterating through the one or more sets of multiple image filters; and
wherein a frequency with each set of the one or more sets of multiple image filters repeats is based at least in part on available compute resources.

10. The method of any preceding claim,
wherein the XR graphics pipeline applies each set of the one or more sets of multiple image filters by iterating through the one or more sets of multiple image filters; and
wherein a frequency with each set of the one or more sets of multiple image filters repeats is based at least in part on a determined eye movement speed of a user.

11. The method of any preceding claim, wherein, for a particular set of multiple image filters matched to a particular initial filter, the number of multiple image filters in the particular set is based on a determined refresh rate of a display.

12. A computer-readable storage medium storing instructions that, when executed by a computing system, cause the computing system to carry out the method of any preceding claim.

13. A computing system for efficient image filtering on an artificial reality (XR) device, the computing system comprising:
one or more processors; and
one or more memories storing instructions that, when executed by the one or more processors, cause the computing system to carry out the method of any of claims 1 to 11.

14. A computer program product comprising instructions which, when the program is executed by a computer, cause the computer to carry out the method of any of claims 1 to 11.
